Europäisches Patentamt

European Patent Office

Office européen des brevets

(19)

(11) Veröffentlichungsnummer: **0 314 001 B1**

(12)

# EUROPÄISCHE PATENTSCHRIFT

(45) Veröffentlichungstag der Patentschrift: **26.01.94**

(51) Int. Cl.5: **C08L 71/12**, C08L 25/00

(21) Anmeldenummer: **88117536.8**

(22) Anmeldetag: **21.10.88**

Die Akte enthält technische Angaben, die nach dem Eingang der Anmeldung eingereicht wurden und die nicht in dieser Patentschrift enthalten sind.

(54) **Thermoplastische Formmassen auf Basis von Polyphenylenether.**

(30) Priorität: **30.10.87 DE 3736852**

(43) Veröffentlichungstag der Anmeldung:
**03.05.89 Patentblatt 89/18**

(45) Bekanntmachung des Hinweises auf die
Patenterteilung:
**26.01.94 Patentblatt 94/04**

(84) Benannte Vertragsstaaten:
**BE DE FR GB NL**

(56) Entgegenhaltungen:
**EP-A- 48 400**
**EP-A- 0 266 773**
**FR-A- 2 346 400**
**FR-A- 2 375 294**
**US-A- 4 373 055**

(73) Patentinhaber: **BASF Aktiengesellschaft
Carl-Bosch-Strasse 38
D-67063 Ludwigshafen(DE)**

(72) Erfinder: **Ostermayer, Bertram, Dr.
Pfaffenpfad 14
D-6701 Roedersheim-Gronau(DE)**
Erfinder: **Schwaben, Hans-Dieter, Dr.
Lindenstrasse 6 a
D-6721 Freisbach(DE)**
Erfinder: **Seiler, Erhard, Dr.
Erpolzheimer Strasse 1
D-6700 Ludwigshafen(DE)**
Erfinder: **Echte, Adolf, Dr.
Leuschnerstrasse 42
D-6700 Ludwigshafen(DE)**
Erfinder: **Brandt, Hermann, Dr.
Keltenstrasse 30
D-6707 Schifferstadt(DE)**

**Beschreibung**

Die Erfindung betrifft thermoplastische Formmassen, enthaltend jeweils bezogen auf 100 Gewichtsteile der Summe aus A, B und gegebenenfalls C,

A) 10 bis 90 Gewichtsteile Polyphenylenether,

B) 10 bis 90 Gewichtsteile eines schlagzäh modifizierten Styrolpolymerisates, bestehend aus

$b_1$ 60 bis 80 Gew.% einer Hartmatrix, aufgebaut aus einem Styrolpolymerisat, und

$b_2$ 20 bis 40 Gew.% einer Weichphase, die

- gleichmäßig in der Hartmatrix verteilt ist,

- erhältlich ist durch Polymerisation der Monomeren der Hartmatrix in Gegenwart eines linearen Styrol-Butadien-Zweiblockcopolymerisates aus 36 bis 45 Gew.% Styrol und 55 bis 64 Gew.% Butadien,

- einen mittleren Teilchendurchmesser $d_{50}$ (Volumenmittel) im Bereich von 0,25 bis 0,38 $\mu$m, eine Teilchengrößenverteilungsbreite $d_{95}$-$d_5$ im Bereich von 0,2 bis 0,6 $\mu$m, einen $d_{60}$-Wert im Bereich von 0,26 bis 0,4 $\mu$m und einen $d_{90}$-Wert im Bereich von 0,4 bis 0,75 $\mu$m hat, und

C) 0 bis 50 Gewichtsteile eines Verstärkungsmittels.

Thermoplastische Formmassen, die sich zur Herstellung von Formteilen eignen und die schlagzäh modifizierte Styrolpolymerisate und Polyphenylenether enthalten, sind z.B. aus den US-Patentschriften 3 383 435, 4 128 602 sowie DE-B 22 11 005 und der DE-A 35 30 304 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß einige Eigenschaften meist noch unbefriedigend sind. Als weiteren Stand der Technik nennen wir

(1) EP-C 48 400 und

(2) DE-C 2 342 119.

Aus (1) ist bekannt, daß die Fließfähigkeit von Formmassen aus Polyphenylenether und schlagzäh modifizierten Styrolpolymerisaten und die Steifigkeit daraus hergestellter Formkörper dadurch verbessert werden kann, daß man ein Styrolpolymerisat einsetzt mit einem Weichkomponentengehalt von mindestens 20 Gew.%, wobei 85 bis 95 Gew.% der Teilchen der Weichkomponente einen Teilchendurchmesser von 0,2 bis 0,5 $\mu$m und 5 bis 15 Gew.% der Teilchen einen Durchmesser von 4 bis 7 $\mu$m haben.

In (2) werden formmassen aus Polyphenylenether und schlagzäh modifiziertem Polystyrol beschrieben, deren Styrolpolymerisat Teilchen der Weichkomponente enthält, die eine mittlere Teilchengröße von 0,1 bis 0,7 $\mu$m aufweisen und deren Membrandicke nicht größer als ein Viertel des mittleren Teilchendurchmessers ist. Die fließfähigkeit und der Glanz der aus (1) und (2) bekannten Formmassen bzw. der daraus hergestellten Formkörper ist jedoch noch verbeserungsbedürftig.

Im Zuge der weiteren Entwicklung wurden diese Formmassen zunehmend verstärkt mit verschiedenen Mitteln, z.B. mit Glasfasern. Dabei zeigte es sich, daß die bekannten Formmassen verbesserungsbedürftig sind. Ihre mechanischen Eigenschaften sind noch nicht befriedigend, insbesondere sind die Biegefestigkeit und die Fließfähigkeit der Formmassen noch nicht ausreichend, wenn sie z.B. durch Glasfasern verstärkt sind.

Es bestand daher die Aufgabe, thermoplastische Formmassen auf Basis von Polyphenylenether bereitzustellen, die die geschilderten Nachteile vermeiden.

Diese Aufgabe wurde gelöst durch die eingangs definierten Formmassen.

Weiterhin wurden spezielle Ausführungsformen der Formmassen gemäß der Unteransprüche sowie die Verwendung der Formmassen zur Herstellung von Formteilen und Formteile aus diesen thermoplastischen Formmassen gefunden.

Die erfindungsgemäße Formmasse enthält, jeweils bezogen auf 100 Gewichtsteile der Summe aus den Komponenten A, B und C, 10 bis 90, bevorzugt 20 bis 80 Gewichtsteile A, 10 bis 90, bevorzugt 20 bis 80 Gewichtsteile B und 0 bis 50, bevorzugt 0 bis 40, insbesondere 15 bis 40 Gewichtsteile C. Vorzugsweise besteht die Formmasse aus diesen Komponenten. Während oder nach der Herstellung der Formmasse können insbesondere für die Verarbeitung übliche Zusatzstoffe zugesetzt werden.

Die für die Komponente A in Frage kommenden Polyphenylenether sind an sich bekannt, sie werden nach üblichen Verfahren aus in o-Position durch Alkylgruppen, Alkoxygruppen, oder auch durch Chlor oder Brom disubstituierten Phenolen, durch oxidative Kupplung hergestellt (vgl. US-Patente 3 661 848, 3 378 505, 3 306 874, 3 306 875 und 3 639 656). Die Alkyl- oder Alkoxygruppen, die bevorzugt 1 bis 4 C-Atome, aber kein $\alpha$-ständiges tertiäres Wasserstoffatom enthalten, können ihrerseits durch Chlor oder Brom substituiert sein. Geeignete Polyphenylenether sind beispielsweise Poly-2,6-diethyl-1,4-phenylenether, Poly-2-methyl-6-ethyl-1,4-phenylenether, Poly-2-methyl-6-propyl-1,4-phenylenether, Poly-2,6-dipropyl-1,4-phenylenether, Poly-2-ethyl-6-propyl-1,4-phenylenether, Poly-2,6-dichlor-1,4-phenylenether und Poly-2,6-dibrom-1,4-phenylenether oder Copolymere, wie solche, die 2,3,6-Dimethylphenol enthalten, außerdem Polymermischungen. Bevorzugt ist Poly-2,6-dimethyl-1,4-phenylenether. Die Polyphenylenether weisen im allgemeinen eine Viskositätszahl von 0,3 bis 0,7 dl/g, gemessen in Chloroform bei 30°C, auf.

B ist zweiphasig aufgebaut und besteht aus 60 bis 80 Gew.%, vorzugsweise 65 bis 75 Gew.% der Komponente $b_1$ (Hartmatrix) und 20 bis 40, vorzugsweise 25 bis 35 Gew.% der Komponente $b_2$ - (Weichphase). Solche Stoffe an sich sind bekannt, z.B. aus der DE-A-37 00 332 (EP-A-274109). Unter einem Styrolpolymerisat im Sinne dieser Erfindung wird ein Polymerisat aus Styrol, aber auch von $\alpha$-Methylstyrol und p-Methylstyrol verstanden.

Die Hartmatrix der erfindungsgemäßen Formmasse ist aus einem Styrolpolymerisat, bevorzugt ausschließlich aus Polystyrol aufgebaut, obwohl anstelle von Styrol auch $\alpha$-Methylstyrol, p-Methylstyrol oder deren Mischungen verwendet werden können. Sie hat eine Glasübergangstemperatur von über 50°C, bestimmt nach K.H. Illers und H. Breuer, Kolloidzeitschrift 176 (1961), Seite 110. Ihre Viskositätszahl liegt im Bereich von 50 bis 100 ml/g (0,5 %ige Lösung in Toluol bei 23°C), insbesondere im Bereich von 60 bis 90 ml/g. Dies entspricht mittleren Molgewichten ($M_w$) von 126 000 bis 210 000. Die Herstellung derartiger Polymere und Copolymerisate (auch in Gegenwart von Kautschuk) ist dem Fachmann bekannt. Hinzuweisen ist darauf, daß zu der Hartmatrix weder das in der Weichphase occludierte Styrolpolymerisat noch der gepfropfte Anteil des Styrolpolymerisates zu rechnen ist.

Die Weichphase $b_2$ liegt fein dispergiert in der Hartmatrix vor. Diese Weichphase und ihr Aufbau kann in bekannter Weise durch elektronenmikroskopische Aufnahmen der Komponente B nachgewiesen bzw. bestimmt werden. Bei der Weichphase handelt es sich um ein Pfropfpolymerisat aus den Monomeren der Hartmatrix, d.h. insbesondere von Styrol, das (die) auf ein lineares Styrol-Butadienzweiblockcopolymerisat gepfropft ist (sind).

Unter einer Weichphase wird eine Elastomerphase mit einer Glasübergangstemperatur von unter 25°C verstanden.

Lineare Styrol-Butadienzweiblockcopolymere sind an sich bekannt, z.B. aus D.C. Allport et al "Block Copolymers" Appl. Sci. Publishers, London 1973, S. 81-87 oder M. Szwarc, "Carbanions, Living Polymers and Electron Transfer Processes", John Wiley and Sons, 1968, Kapitel II, so daß sich weitere Angaben erübrigen.

Als lineare Styrol-Butadien-Zwei-Blockcopolymerisate werden die durch anionische Polymerisation mit Lithiuminitiatoren hergestellten Blockcopolymerisate mit sogenanntem verschmierten (tapered) Übergang bevorzugt, die durch Polymerisation einer Mischung der Monomeren Butadien und Styrol in Abwesenheit von Randomisern hergestellt werden können. Verfahren zur Herstellung dieser linearen Zwei-Blockcopolymerisate sind dem Fachmann bekannt, s. z.B. R. Zelinski et al, Rubber Chem. and Technol, 41 (1968, S. 161-181). Der Polybutadienanteil dieser linearen Zwei-Blockpolymerisate liegt im Bereich von 55 bis 64 Gew.% und insbesondere 57 bis 62 Gew.%. Der Anteil an Styrol beträgt dementsprechend 36 bis 45 Gew.% und insbesondere 38 bis 43 Gew.%. Da bevorzugt ein bestimmter Anteil des Styrols entlang der Blockcopolymerisatkette verschmiert in dem Polybutadiensegment vorliegt, liegt der Anteil an Blockpolystyrol des bevorzugten Zweiblockcopolymerisates im Bereich von 25 bis 35 %, bevorzugt von 30 bis 32 Gew.%.

Das Molekulargewicht des linearen Zweiblockcopolymerisats liegt bevorzugt im Bereich von 180.000 bis 250.000, dasjenige des Styrolblocks im Bereich von 50.000 bis 70.000 (jeweils Gew.-Mittelwerte).

Wesentlich für die Einstellung des Erfolgs ist zusätzlich zur Verwendung spezieller Blockcopolymerisate, daß die Weichphase eine besondere Teilchengrößenverteilung besitzt.

Die Teilchen der Weichphase weisen einen Teilchendurchmesser $d_{50}$ (Volumenmittel) im Bereich von 0,25 bis 0,38 $\mu$m auf. Die Teilchengrößenverteilungsbreite (($d_{95}$-$d_5$)-Wert) beträgt von 0,2 bis 0,6 $\mu$m, der $d_{60}$-Wert liegt im Bereich von 0,26 bis 0,4 $\mu$m und der $d_{90}$-Wert beträgt von 0,4 bis 0,75 $\mu$m.

Die Teilchen der Weichphase bestehen im allgemeinen überwiegend aus Kapselteilchen, vorzugsweise zu mehr als 90, insbesondere mehr als 97 % der Teilchenzahl. Unter einem Kapselteilchen wird ein Teilchen der Weichphase verstanden, das im wesentlichen nur ein Hartmatrixteilchen occludiert enthält, im Gegensatz zu den sogenannten Zellenteilchen, die viele Hartmatrixteilchen occludiert enthalten. Die Morphologie der Weichphase wird in A. Echte, Angew. Makromol. Chemie, 58/59 (1977) 175 dargestellt.

Die Herstellung der Komponente B erfolgt vorzugsweise durch diskontinuierliche Polymerisation des oder der die Hartmatrix aufbauenden Monomeren, d.h. insbesondere von Styrol, in Gegenwart des linearen Styrolbutadien-Zweiblockcopolymeren. Die Polymerisation kann dabei unter Verwendung von Reglern und den üblichen Initiatoren oder rein thermisch oder gemischt thermisch-radikalisch durchgeführt werden. Bei der diskontinuierlichen Verfahrensweise ist die Durchführung in einem Zweistufenverfahren bevorzugt, wobei die erste Verfahrensstufe in bekannter Weise in Masse, gegebenenfalls unter Verwendung eines Lösungsmittels, erfolgt und die zweite Stufe in Suspension durchgeführt wird. Verfahren zur diskontinuierlichen Durchführung des Verfahrens sind in der DE-B 2 613 352 bzw. in der US-A 2 862 906 hinreichend beschrieben, so daß der Fachmann darauf zurückgreifen kann.

Beim bevorzugten diskontinuierlichen Verfahren, das in der ersten Stufe in Masse oder gegebenenfalls in Lösung durchgeführt wird, erfolgt die Einstellung der erforderlichen Verteilung der Weichphase und der Morphologie (Kautschukmorphologie) mit Hilfe von Scherkräften (Rühren). Die Temperaturen in der ersten Verfahrensstufe liegen im Bereich von 50 °C bis 200 °C. Es werden Umsätze bis 40 Gew.%, bezogen auf die eingesetzten Monomeren, angestrebt. In der nachfolgenden zweiten Verfahrensstufe, die in Suspension durchgeführt wird, werden dem Reaktionsansatz Wasser und die üblichen wasserlöslichen Suspensionsmittel sowie gegebenenfalls Initiatoren zugesetzt. Als Suspensionsmittel kommen insbesondere in Betracht: Methylcellulose, Oxypropylcellulose, Polyvinylalkohol und Polyvinylpyrrolidon.

Als Lösungsmittel, die gegebenenfalls angewendet werden, kommen in Betracht: Toluol, Xylol, Ethylbenzol und Methylethylketon. Die genannten Lösungsmittel werden in Mengen von 2 bis 25 Gew.%, bezogen auf Monomere, angewendet. Bevorzugt wird, falls überhaupt ein Lösungsmittel angewendet wird, Ethylbenzol.

Als Kettenüberträger kommen die üblicherweise verwendeten Mercaptane mit 4 bis 18 C-Atomen in Betracht. Von den genannten Mercaptanen haben sich besonders das n-Butylmercaptan, das n-Octylmercaptan sowie das n- oder t-Dodecylmercaptan bewährt. Diese Mercaptane werden in Mengen von 0,01 bis 0,3 Gew.%, bezogen auf Monomere, vorzugsweise in der 1. Verfahrensstufe angewendet bzw. dem Reaktionsansatz schon zugegeben.

Als Initiatoren kommen insbesondere Peroxide mit Halbwertszeiten von 5 min bis 6 h bei 100 °C in Frage. Als Beispiele seien genannt Dibenzoylperoxid, Dilauroylperoxide und 1,1-Ditertbutylperoxi-3,3,5-trimethylcyclohexan, die vorzugsweise in der 2. Verfahrensstufe zugesetzt werden.

Bei der Herstellung der Komponente B erfolgt die Einstellung der mittleren Teilchengröße als auch der Teilchengrößenverteilung der Teilchen der Weichphase $b_2$ durch Scherung nach der Phaseninversion. Auch die Kautschukmorphologie läßt sich durch diese Maßnahme steuern. Diese Scherung, mit der der polymerisierende Ansatz beansprucht wird, ist in hohem Maße abhängig von der Anlage, die zur Polymerisation verwendet wird.

Bei der Übertragung des Verfahrens von einer Anlage in eine andere, z.B. von einer kleineren in eine größere, sind daher stets einige orientierende Versuche notwendig, um die Scherbedingungen herauszufinden, die zu einem mittleren Durchmesser und einer Teilchengrößenverteilungsbreite im beanspruchten Bereich bzw. zu überwiegend Kapselteilchen führen. Bei einer solchen Übertragung muß insbesondere die Rührgeschwindigkeit, die Art des Rührwerkes, seine Geometrie, seine Eintauchtiefe in die polymerisierende Flotte, Einbauten in den gerührten Reaktoren, wie z.B. Strombrecher usw., berücksichtigt werden. Dasselbe gilt für die Übertragung auf ein kontinuierliches Verfahren wie es z.B. in DE-B 1 770 392 beschrieben ist.

Als Komponente C können die erfindungsgemäßen Formmassen übliche Verstärkungsmittel, wie Glasfasern, Glaskugeln, Mineralfasern, Aluminiumoxidfasern, Glimmer, Metallflocken, Gipsfasern, synthetische Kalziumsilikate, Kaolin, kalziniertes Kaolin, Talkum, Kreide oder Wollastonit enthalten. Bevorzugt sind Glasfasern. Die verwendeten Glasfasern können aus E-, A- oder C-Glas sein und mit einer Schlichte und einem Haftvermittler ausgerüstet sein. Ihr Durchmesser liegt im allgemeinen zwischen 6 und 20 $\mu$m. Es können Kurzglasfasern mit einer mittleren Länge von 0,05 bis 1,5 mm, Fasern in Granulatlänge (Glasfaserlänge von 1 bis 10, vorzugsweise 3 bis 6 mm) oder Endlosfasern (Rovings) verwendet werden.

Als Zusatzstoffe seien genannt übliche Hitze- und Lichtstabilisatoren, Gleit- und Entformungsmittel, Färbemittel, wie Farbstoffe und Pigmente in üblichen Mengen. Ferner seien Flammschutzmittel genannt, insbesondere phosphorhaltige, wie Phosphorsäurealkylester und Phosphinoxide. Gute Flammhemmung wird mit Triphenylphosphat und Triphenylphosphinoxid erzielt. Weiterhin können in den erfindungsgemäßen Formmassen andere als die genannten Polymerisate, z.B. auf vinylaromatischer Basis oder Polyamide zugesetzt werden.

Die Herstellung der erfindungsgemäßen thermoplastischen Formmassen erfolgt zweckmäßigerweise durch Mischen der Komponenten bei Temperaturen im Bereich von 200 bis 320 °C, vorzugsweise 250 bis 300 °C in üblichen Mischvorrichtungen, wie z.B. Knetern, Banburry-Mischern und Einschneckenextrudern, vorzugsweise in einem Zweischneckenextruder. Um eine möglichst homogene Formmasse zu erhalten, ist eine intensive Durchmischung notwendig, was in bekannter Weise erreicht werden kann. Die Verweilzeiten liegen im allgemeinen im Bereich von 0,5 bis 30 min., vorzugsweise von 1 bis 5 min. Die Reihenfolge des Mischens der Komponenten kann variiert werden, es können ausgewählte Komponenten vorgemischt sein oder es können auch alle Komponenten gemeinsam gemischt werden.

Die erfindungsgemäßen Formmassen eignen sich gut zur Herstellung von Formteilen aller Art, z.B. durch Spritzguß oder Extrusion.

Die Formmassen bzw. die daraus hergestellten Formteile weisen vorteilhafte mechanische, elektrische und thermische Eigenschaften eine gute Fließfähigkeit und vorteilhaften Glanz der daraus hergestellten Formkörper auf. Die Formmassen weisen eine gute Biegespannung, kombiniert mit hoher Fließfähigkeit und Schlagzähigkeit auf, wenn sie z.B. mit Glasfasern verstärkt sind.

Beispiele 1 bis 4 und Vergleichsversuche 1* bis 4*

Komponente A

Poly-2,6-dimethyl-1,4-phenylenether mit einer Viskositätszahl von 0,55 dl/g, gemessen in Chloroform bei 30°C.

Komponente B

Zur Durchführung der Beispiele und für Vergleichszwecke wurden die Produkte B(1) bis B(5) verwendet.

Als Kautschuk (elastomere Pfropfgrundlage) für die Polymerisate B(1) und B(2) wurde ein Handelsprodukt, Buna® BL 6533 verwendet (® = eingetragenes Warenzeichen der Fa. Hüls AG). Es handelt sich um ein lineares Styrol-Butadien-Zwei-Blockcopolymerisat mit verschmiertem Übergang, das ca. 42 Gew.% Styrol, 58 Gew.% Butadien bei ca. 31 Gew.% Blockpolystyrol aufweist. Das Gesamtmolekulargewicht beträgt 205 000, das des Styrolblocks 60 000.

Herstellung der Polymerisate B(1) und B(2)

Die Polymerisation erfolgte diskontinuierlich im 10 kg-Maßstab nach einem Masse-Suspensions-Prozeß in einer Zwei-Kessel-Kaskade, bestehend aus den Kesseln A und B. Im Kessel A (~20 l Fassungsvermögen, 304 mm Durchmesser, 300 mm Höhe) wird die Vorpolymerisation der styrolischen Kautschuklösung isotherm unter Rühren durchgeführt. Jedem der beiden Polymerisationsansätze wurden, bezogen auf 100 Teile Styrol und Kautschuk, 0,1 Teile t-Dodecylmercaptan als Molekulargewichtsregler, 2,3 Teile Minog® 70 als Mineralöl und 0,12 Teile Irganox® 1076 (eines sterisch gehinderten Phenols) als Antioxidans zugesetzt. Es wurden jeweils 85 Gew.% Styrol und 15 Gew.% Kautschuk als Reaktionsansatz verwendet. Der genannte Ansatz aus Styrol, elastomerer Pfropfgrundlage, sowie zusätzlich Mineralöl, Antioxidans und Regler wurde in einer Menge von 12.000 g in den Kessel gegeben. Daraus ergibt sich ein Füllgrad des Kessels von ca. 66 Vol.% bei T = 20°C. wenn man die Dichte des Styrol von 0,906 g/cm$^3$ bei T = 20°C zugrundelegt. Als Rührer wurde ein Ankerrührer (Wellendurchmesser: 28 mm, Blattlänge 210 mm) mit einem Durchmesser von 285 mm verwendet, dessen Abstand vom Boden des Kessels 20 mm betrug. Daraus folgt bei einer Füllhöhe von 215 mm bei Raumtemperatur eine Eintauchtiefe des Rührers von 195 mm.

Die Lösung wurde bei T = 123°C bis zu Umsätzen von 35±1 % gerührt und zwar bei Rührerdrehzahlen von 55 (B(1)) bzw. 65 min$^{-1}$ (B(2)).

Im Kessel B, einem ebenfalls mit einem Ankerrührer ausgestatteten Kessel mit einem Fassungsvermögen von 40 l, werden 18.000 g Wasser, 180 g Luviskol® K 90, einem Schutzkolloid auf Basis von Ethylenoxid, und 18 g Natriumpyrophosphat gegeben und auf ca. 100°C gebracht. Ist in Kessel A der Umsatz auf den Wert von 35±1 %, bezogen auf das Styrol, gestiegen, werden 0,1 Teile Dicumylperoxid, bezogen auf den Gesamtansatz, zugesetzt. Die Rührerdrehzahl in Kessel B wird dann auf 300 min$^{-1}$ eingestellt und der Inhalt von Kessel A mittels Stickstoff über ein Verbindungsrohr innerhalb von maximal 15 min in den Kessel B gedrückt. In der derart hergestellten wäßrigen Suspension wird anschließend jeweils isotherm 6 h bei T = 130°C und 6 h bei T = 140°C bis zu einem Umsatz von mehr als 99 %, bezogen auf Styrol, polymerisiert. Nach dieser Zeit wird der Kesselinhalt auf 30°C abgekühlt, abgelassen und gründlich mit Wasser gewaschen und anschließend 24 h im Vakuumtrockenschrank bei T = 60°C und p = 20 Torr getrocknet. Danach erfolgt eine Konfektionierung über einen Extruder (ZSK 30, Werner + Pfleiderer), um das Produkt in eine Granulatform zu bringen.

Bei den Produkten B(3), B(4) und B(5) handelt es sich um Handelsprodukte der BASF Aktiengesellschaft mit unterschiedlicher Kautschukmorphologie, die jeweils ca. 8,1 Gew.% Kautschuk, berechnet als Polybutadien, aufweisen. Die Teilchendurchmesser und Teilchengrößenverteilungswerte sind in Tabelle 1 enthalten.

B(3):

Schlagfestes Polystyrol 525 K mit Kapselteilchenmorphologie. Die Viskositätszahl beträgt 78 ml/g.

B(4):

Schlagfestes Polystyrol KR 2794 mit Zellenteilchenmorphologie. Die Viskositätszahl beträgt 70 ml/g.

B(5):

Schlagfestes Polystyrol 2710 mit Zellenteilchenmorphologie und einer Viskositätszahl von 70 ml/g.

Tabelle 1

| Durchmesser der Elastomerphase der Komponente B | | | | | | |
|---|---|---|---|---|---|---|
| Komponente | Teilchengrößendurchmesser in [$\mu$m] | | | | | |
| | $d_{50}$ | $d_{95}$ | $d_5$ | $(d_{95}-d_5)$ | $d_{60}$ | $d_{90}$ |
| B(1) | 0,32 | 0,64 | 0,21 | 0,43 | 0,34 | 0,50 |
| B(2) | 0,28 | 0,52 | 0,19 | 0,33 | 0,31 | 0,48 |
| B(3) | 0,29 | 0,38 | 0,21 | 0,17 | 0,30 | 0,35 |
| B(4) | 0,85 | | | | | |
| B(5) | 5,5 | | | | | |

Komponente C

C(1):

Glasfaser OFC® R20 E4 der Owens Corning Fiberglass Corp., Faserdicke 10 $\mu$m.

C(2):

Vitrofil® CP 715 der Montedison GmbH, Faserdicke 15 $\mu$m

C(3):

Silenka® 8720 der Silenka GmbH, Faserdicke 20 $\mu$m.

Die in der Tabelle 2 angegebenen Gewichtsteile schlagfest modifizierten Polystyrols und von Poly-2,6-dimethyl-1,4-phenylenether wurden mit jeweils 0,8 Gewichtsteilen Tris(nonylphenyl)phosphit und 1,5 Gewichtsteilen Polyethylen auf einem Zweiwellenextruder bei 280°C geschmolzen, homogenisiert, gemischt und granuliert.

Folgende Prüfungen wurden durchgeführt:

Die Viskositätszahl wurde nach DIN 53 726 gemessen. Die Fließfähigkeit wurde gemessen nach DIN 53 735 bei 250°C und 21,6 kg/cm² Last. An bei 280°C hergestellten Prüfkörpern wurden folgende Eigenschaften ermittelt: Die Schlagzähigkeit wurde nach DIN 54 453, die Biegespannung bei Höchstkraft sowie die Randfaserdehnung bei Bruch nach DIN 53 452 gemessen.

Von der Komponente B der Beispiele und Vergleichsversuche wurden in bekannter Weise elektromikroskopische Dünnschichtaufnahmen angefertigt, die zur Untersuchung der Kautschukmorphologie und zur Bestimmung der Teilchengrößen und Verteilung der Weichphase dienten. Die Bestimmung geschah mit Hilfe der Bildanalyse nach dem Verfahren, wie es von W. Alex in der Zeitschrift für Aufbereitung und Verfahrenstechnik 13, (1972) im Kap. 3.11 beschrieben ist. Die Zahl der ausgewerteten Teilchen lag zwischen 4000 und 9500.

Bei der Angabe der mittleren Teilchengröße handelt es sich in allen Fällen um das Volumenmittel der Teilchengröße. Die Bildanalyse liefert die integrale Volumenverteilung des Teilchendurchmessers einer Probe. Hieraus läßt sich entnehmen, wieviel Volumenprozent der Teilchen einen Durchmesser gleich oder kleiner einer bestimmten Größe haben. Der mittlere Teilchendurchmesser, der auch als $d_{50}$-Wert der integralen Volumenverteilung bezeichnet wird, ist dabei als der Teilchendurchmesser definiert, bei dem 50 Vol.% der Teilchen einen kleineren Durchmesser haben als der Durchmesser, der dem $d_{50}$-Wert entspricht. Ebenso haben dann 50 Vol.% der Teilchen einen größeren Durchmesser als dem $d_{50}$-Wert entspricht. Zur Charakterisierung der Teilchengrößenverteilung der Kautschukteilchen werden neben dem $d_{50}$-Wert (mittlerer Teilchendurchmesser) die sich ebenfalls aus der integralen Volumenverteilung ergebenden $d_5$- und $d_{95}$-Werte herangezogen. Der $d_5$- bzw. $d_{60}$, $d_{90}$- und der $d_{95}$-Wert der integralen Volumenverteilung sind dabei entsprechend dem $d_{50}$-Wert definiert mit dem Unterschied, daß sie auf 5, 60, 90 bzw. 95 Vol.% der Teilchen bezogen sind.

Tabelle 2: Zusammensetzung und Eigenschaften der Formmassen

| Beispiele und Vergleichs- versuche | Zusammensetzung der Formmasse [kg] Komponente | | | | | Eigenschaften | | | |
|---|---|---|---|---|---|---|---|---|---|
| | Komp. A Menge | Art | Menge | Art | Menge | Fließfähigkeit [g/10 min] | Schlagzähig- keit [kJ/m²] | Biegespan- nung bei Höchstkraft [N/mm²] | Randfaser- dehnung bei Bruch [%] |
| 1 | 60 | B(2) | 40 | C(3) | 30 | 5 | 18 | 133 | 2,8 |
| 1* | 60 | B(4) | 40 | C(3) | 30 | 5 | 11 | 110 | 1,9 |
| 2 | 30 | B(1) | 70 | C(2) | 35 | 12 | 15 | 105 | 2,1 |
| 2* | 30 | B(4) B(5) | 63 7 | C(2) | 35 | 10 | 11 | 88 | 1,7 |
| 3 | 50 | B(1) | 50 | C(1) | 40 | 6 | 19 | 122 | 3,0 |
| 3* | 50 | B(3) B(5) | 45 5 | C(1) | 40 | 4 | 15 | 113 | 2,3 |
| 4 | 45 | B(2) | 55 | C(2) | 25 | 9 | 17 | 118 | 2,8 |
| 4* | 45 | B(3) | 55 | C(2) | 25 | 7 | 14 | 114 | 2,5 |

**Patentansprüche**

1. Thermoplastische Formmassen, enthaltend jeweils bezogen auf 100 Gewichtsteile der Summe aus A, B und gegebenenfalls C

8

A) 10 bis 90 Gewichtsteile Polyphenylenether,

B) 10 bis 90 Gewichtsteile eines schlagzäh modifizierten Styrolpolymerisates, bestehend aus

$b_1$ 60 bis 80 Gew.% einer Hartmatrix, aufgebaut aus einem Styrolpolymerisat, und

$b_2$ 20 bis 40 Gew.% einer Weichphase, die

- gleichmäßig in der Hartmatrix verteilt ist,
- erhältlich ist durch Polymerisation der Monomeren der Hartmatrix in Gegenwart eines linearen Styrol-Butadien-Zweiblockcopolymerisates aus 36 bis 45 Gew.% Styrol und 55 bis 64 Gew.% Butadien,
- einen mittleren Teilchendruchmesser $d_{50}$ (Volumenmittel) im Bereich von 0,25 bis 0,38 $\mu$m, eine Teilchengrößenverteilungsbreite $d_{95}$-$d_5$ im Bereich von 0,2 bis 0,6 $\mu$m, einen $d_{60}$-Wert im Bereich von 0,26 bis 0,4 $\mu$m und einen $d_{90}$-Wert im Bereich von 0,4 bis 0,75 $\mu$m hat, und

C) 0 bis 50 Gewichtsteile eines Verstärkungsmittels.

2. Thermoplastische Formmassen nach Anspruch 1, dadurch gekennzeichnet, daß die Weichphase $b_2$ des schlagzäh modifizierten Styrolpolymerisates erhältlich ist durch Polymerisation von Styrol in Gegenwart eines linearen Styrol-Butadien-Blockcopolymerisates, das 38 bis 43 Gew.% Styrol und 57 bis 62 Gew.% Butadien aufweist.

3. Thermoplastische Formmassen nach Anspruch 2, dadurch gekennzeichnet, daß die Weichphase $b_2$ des schlagzäh modifizierten Styrolpolymerisates erhältlich ist durch Polymerisation von Styrol in Gegenwart eines linearen Styrol-Butadien-Blockcopolymerisates mit verschmiertem Übergang, das einen Blockpolystyrolgehalt von 30 bis 32 Gew.% aufweist und dessen mittleres Molekulargewicht im Bereich von 180 000 bis 250 000 liegt, wobei das Molekulargewicht des Styrolblockes 50 000 bis 70 000 beträgt.

4. Thermoplastische Formmassen nach den Ansprüchen 1 bis 3, dadurch gekennzeichnet, daß sie 15 bis 40 Gewichtsteile C enthalten.

5. Verwendung von Formmassen gemäß der Ansprüche 1 bis 4 zur Herstellung von Formteilen.

6. Formteile aus Formmassen gemäß den Ansprüchen 1 bis 4.

**Claims**

1. A thermoplastic molding material containing, based in each case on 100 parts by weight of the sum of A, B and, if required, C,

A) from 10 to 90 parts by weight of a polyphenylene ether,

B) from 10 to 90 parts by weight of a toughened styrene polymer consisting of

$b_1$ from 60 to 80% by weight of a rigid matrix composed of a styrene polymer and

$b_2$ from 20 to 40% by weight of a flexible phase which

is uniformly distributed in the rigid matrix, is obtainable by polymerization of the monomers of the rigid matrix in the presence of a linear styrene/butadiene two-block copolymer comprising from 36 to 45% by weight of styrene and from 55 to 64% by weight of butadiene and has a median particle diameter $d_{50}$ (volume average) of from 0.25 to 0.38 $\mu$m, a particle size distribution width $d_{95}$-$d_5$ of from 0.2 to 0.6 $\mu$m, a $d_{60}$ value of from 0.26 to 0.4 $\mu$m and a $d_{90}$ value of from 0.4 to 0.75 $\mu$m, and

C) from 0 to 50 parts by weight of a reinforcing agent.

2. A thermoplastic molding material as claimed in claim 1, wherein the flexible phase $b_2$ of the toughened styrene polymer is obtainable by polymerization of styrene in the presence of a linear styrene/butadiene block copolymer which contains from 38 to 43% by weight of styrene and from 57 to 62% by weight of butadiene.

3. A thermoplastic molding material as claimed in claim 2, wherein the flexible phase $b_2$ of the toughened styrene polymer is obtainable by polymerization of styrene in the presence of a linear tapered styrene/butadiene block copolymer which has a block polystyrene content of from 30 to 32% by weight and whose average molecular weight is from 180,000 to 250,000, the molecular weight of the styrene block being from 50,000 to 70,000.

4. A thermoplastic molding material as claimed in any of claims 1 to 3, which contains from 15 to 40 parts by weight of C.

5. Use of a molding material as claimed in any of claims 1 to 4 for the production of moldings.

6. A molding comprising a molding material as claimed in any of claims 1 to 4.

**Revendications**

1. Matières à mouler thermoplastiques, qui contiennent, à chaque fois rapportés à 100 parties en poids de la somme de A, B et éventuellement C,
   A) 10 à 90 parties en poids de poly(éther phénylénique),
   B) 10 à 90 parties en poids d'un polymère du styrène modifié en vue de le rendre résilient, constitué de
      $b_1$ 60 à 80% en poids d'une matrice dure, formée d'un polymère du styrène et
      $b_2$ 20 à 40% en poids d'une phase molle, qui
         - est uniformément répartie dans la matrice dure,
         - peut être obtenue par la polymérisation des monomères de la matrice dure en présence d'un copolymère à deux séquences styrène-butadiène formé de 36 à 45% en poids de styrène et de 55 à 64% en poids de butadiène,
         - possède un diamètre moyen des particules $d_{50}$ (moyenne volumique) qui se situe dans la plage de 0,25 à 0,38 mym, possède une plage de répartition granulométrique $d_{95}$-$d_5$ qui varie de 0,2 à 0,6 mym, possède une valeur $d_{60}$ qui se situe dans la gamme de 0,26 à 0,4 mym et possède une valeur $d_{90}$ qui fluctue de 0,4 à 0,75 mym et
      C) 0 à 50 parties en poids d'un agent de renforcement.

2. Matières à mouler thermoplastiques suivant la revendication 1, caractérisées en ce que la phase molle $b_2$ du polymère de styrène modifié en vue de le rendre résilient peut être obtenue par la polymérisation du styrène en présence d'un copolymère séquencé de styrènebutadiène, linéaire, qui comporte de 38 à 43% en poids de styrène et de 57 à 62% en poids de butadiène.

3. Matières à mouler thermoplastiques suivant la revendication 2, caractérisées en ce que la phase molle $b_2$ du polymère de styrène modifié en vue de le rendre résilient peut être obtenue par la polymérisation du styrène en présence d'un copolymère séquencé de styrène-butadiène, linéaire, avec une transition étroite et barbouillée, qui comporte une teneur en séquence de polystyrène de 30 à 32% en poids et dont le poids moléculaire moyen varie de 180.000 à 250.000, où le poids moléculaire de la séquence de styrène fluctue de 50.000 à 70.000.

4. Matières à mouler thermoplastiques suivant les revendications 1 à 3, caractérisées en ce qu'elles contiennent de 15 à 40 parties en poids de C.

5. Utilisation de matières à mouler suivant l'une quelconque des revendications 1 à 4, en vue de la fabrication d'articles moulés.

6. Articles moulés obtenus à partir des matières à mouler suivant l'une quelconque des revendications 1 à 4.